# EUROPÄISCHE PATENTSCHRIFT

(11) **EP 1 152 915 B1**
(45) Veröffentlichungstag und Bekanntmachung des Hinweises auf die Patenterteilung: **19.03.2003**
(21) Anmeldenummer: 00903649.2
(22) Anmeldetag: 28.01.2000
(51) Int. Cl.: B60L 5/28

(54) **VORRICHTUNG ZUR ERFASSUNG DER ANPRESSKRAFT ZWISCHEN EINEM FAHRDRAHT UND EINEM STROMABNEHMER**
DEVICE FOR DETERMINING THE PRESSURE BETWEEN A CONTACT WIRE AND A PANTOGRAPH
DISPOSITIF PERMETTANT DE DETERMINER LA PRESSION ENTRE UN FIL CONDUCTEUR ET UN DISPOSITIF DE PRISE DE COURANT

(30) Priorität: 09.02.1999 DE 19906162
(43) Veröffentlichungstag der Anmeldung: 14.11.2001
(73) Patentinhaber: Bombardier Transportation GmbH, 13627 Berlin (DE)
(72) Erfinder: BRAND, Werner, D-13507 Berlin (DE); MOLLENHAUER, Olaf, D-98693 Ilmenau (DE)
(74) Vertreter: Cohausz & Florack
(86) Internationale Anmeldenummer: EP0000656
(87) Internationale Veröffentlichungsnummer: WO00047439

(56) Entgegenhaltungen:
- WO-A-98/56610
- DE-A- 2 831 396
- DE-A- 19 529 070

## Beschreibung

Die Erfindung bezieht sich auf eine Vorrichtung nach dem Oberbegriff des Anspruchs 1.

Stromabnehmer moderner Hochgeschwindigkeitsschienenfahrzeuge sollen hinsichtlich der Kontaktkraft zwischen der Schleifleist ihres Stromabnehmers und dem Fahrdraht als aktiv geregelte Stromabnehmer ausgeführt werden, um unabhängig von den Relativbewegungen zwischen Schienenfahrzeug und Fahrdraht, den von Wind und Fahrzeuggeschwindigkeit abhängigen aerodynamischen Kräften auf die Stromabnehmerbauteile sowie dem Schwingungsverhalten des Stromabnehmers, des Fahrdrahtes und des diesen haltenden Kettenwerks ein Optimum bei der Güte der Energieversorgung und dem Verschleiß an der Kontaktstelle zwischen Fahrdraht und Schleifleist finden und halten zu können. Während jener Kraftanteil der wahren Kontaktkraft, der aus der fahrzeuggeschwindigkeitsabhängigen Luftanströmung auf die Stromabnehmerbauteile resultiert, durch Messungen bestimmbar und für einen Regelalgorithmus als Parameterfunktion einprägbar ist, erfordert die Bestimmung der aus der mechanischen Aktion des Stromabnehmers und der Oberleitungsanlage resultierenden Anpreßkraft eine Einrichtung, die möglichst nahe an der Kontaktstelle diese Anpreßkraft nach ihrem Betrag und Ihrem Angriffspunkt bestimmt und vom Meßort, der sich auf Hochspannungsniveau (z.B. 3 kV Gleichspannung; 15 kV oder 25 kV Wechselspannung) befindet, anpreßkraftäquivalente Signale an fahrzeuginterne Auswerteeinrichtung, die sich auf Gegenpotential befinden, weiterleitet.

In der internationalen Anmeldung PCT 98/DE01657 wird eine Einrichtung zur Messung der Anpreßkraft zwischen einem Fahrdraht und einem Stromabnehmer eines elektrisch gespeisten Fahrzeugs, insbesondere eines elektrischen Schienenantriebfahrzeugs, beschrieben, die mit mindestens einem für die Bestimmung der Anpreßkraft zwischen dem Fahrdraht und einer Schleifleiste des Stromabnehmers geeigneten Phase optischen Sensor, einer Einrichtung zur Sensorsteuerung und Sensorsignalverarbeitung und einer diese verbindenden Phase optischen Einrichtung zur potential getrennten Signalübertragung versehen ist. Dabei soll der faseroptische Sensor möglichst nahe der wirklichen Kontaktstelle zwischen Stromabnehmer und Fahrdraht angeordnet sein und angreifende Kräfte zwischen den Bauteilen direkt ohne größere Relativwege zwischen ihnen messen können. Das schwingungstechnische und das aerodynamische Verhalten des Stromabnehmers sollen durch die Meßeinrichtung weitestgehend ungestört bleiben. Es sollen eine Bestimmung der Anpreßkraft sowohl nach ihrem Betrag als auch nach ihrem Angriffsort auf dem Schleifstück möglich sein und anpreßkraftäquivalente Signale erzeugt werden, die für einen aktiv geregelten Stromabnehmer verwendbar sind.

Zu diesem Zweck sind zwischen einem Grundkörper der Schleifleist und einem Schleifleistenträger (Wippenrahmen) bzw. einem Schleifstück und dem Grundkörper der Schleifleiste jeweils mit beiden fest verbunden zwei federelastische Verformungskörper angeordnet, die die Schleifleist bzw. das Schleifstück tragen und in denen je ein faseroptischer Reflexsensor integriert ist, der anpreßäquivalente Verformungen des Verformungskörpers detektiert und an die Einrichtung zur Sensorsteuerung und Sensorsignalverarbeitung signalisiert, in der die detektierten Verformungen in anpreßkraftäquivalente Signale umgewandelt und ausgegeben oder aus denen gewünschte anpreßkraftänderungsäquivalente Befehle abgeleitet und ausgegeben werden.

Wenn die federelastischen Verformungskörper zwischen dem Schleifstück und dem Grundkörper der Schleifleiste angeordnet sind, ergibt sich der Vorteil, daß auch die auf den Grundkörper als Auftrieb oder Abtrieb wirkenden Kräfteanteile aus der windund fahrzeuggeschwindigkeitsabhängigen Luftanströmung bei der Messung berücksichtigt werden. Jedoch ist diese Lösung konstruktiv aufwendiger als bei der Anordnung der Verformungskörper zwischen dem Grundkörper der Schleifleiste und dem Schleifleistenträger. Außerdem hat sich herausgestellt, daß diese aerodynamischen Kräfte weitgehend vernachlässigbar sind.

Es wurde jedoch gefunden, daß durch beim Fahren auftretenden Schwingungen des Fahrdrahtes und des Stromabnehmers Beschleunigungskräfte erzeugt werden, die von der bekannten Meßeinrichtung nicht berücksichtigt werden, jedoch die tatsächliche Anpreßkraft gegenüber der gemessenen "statischen" Anpreßkraft nicht unbeträchtlich erhöhen oder verringern können. Diese Beschleunigungskräfte können aus dem Produkt von Masse und Beschleunigung der Schleifleiste berechnet werden. Da die Masse der Schleifleiste bekannt ist, ist die Erfassung der Beschleunigung ausreichend, um den Einfluß der (positiven oder negativen) Beschleunigung des Stromabnehmers auf die Anpreßkraft ermitteln zu können.

Die Messung der in Richtung der Anpreßkraft auftretenden Beschleunigungen des Stromabnehmers erfolgt bereits mit Hilfe von piezoelektrischen oder kapazitiven Beschleunigungsaufnehmern. Diese liegen jedoch auf dem Potential des Stromabnehmers, d.h. auf Hochspannungsniveau, und erzeugen elektrische Signale, die mittels Potentialtrennung auf das Potential der Auswerteinrichtung herabgesetzt werden müssen. Eine derartige Potentialtrennung ist jedoch mit einem hohen Aufwand verbunden, bewirkt eine Beeinträchtigung der Signalgüte und läßt wegen eines mehrmaligen Filterns nur eine geringe Meßfrequenz zu.

Es ist daher die Aufgabe der vorliegenden Erfindung, eine Vorrichtung zur Erfassung der Anpreßkraft zwischen einem Fahrdraht und einem Stromabnehmer eines elektrisch gespeisten Fahrzeugs mit einer Meßeinrichtung für die statische Anpreßkraft, die aus dem von der statischen Anpreßkraft abhängigen Abstand zwischen zwei elektrisch miteinander verbundenen Bauteilen des Stromabnehmers bestimmt wird, und mit einem mit dem Stromabnehmer gekoppelten Beschleunigungssensor für die Ermittlung der in Richtung der Anpreßkraft erfolgenden Beschleunigungen des Stromabnehmers, dessen Ausgangssignal mit dem Ausgangssignal der Meßeinrichtung zur Berechnung der Anpreßkraft verknüpft wird, anzugeben, bei der die mit der bisherigen Potentialtrennung verbundenen Nachteile vermieden werden und somit eine exaktere Erfassung der Anpreßkraft bei geringerem Aufwand möglich ist.

Diese Aufgabe wird erfindungsgemäß gelöst durch die im kennzeichnenden Teil des Anspruchs 1 angegebenen Merkmale. Vorteilhafte Weiterbildungen der erfindungsgemäßen Vorrichtung ergeben sich aus den Unteransprüchen.

Dadurch, daß der Beschleunigungssensor eine federnd am Stromabnehmer (6) angebrachte seismische Masse (3) aufweist, deren jeweilige Position optisch erfaßt und ein entsprechendes Lichtsignal zu einem vom Stromabnehmer potentialmäßig getrennten optoelektrischen Wandler übermittelt wird, wird die Potentialtrennung mit einfachen Mitteln und ohne Beeinträchtigung des Lichtsignals auf optischem Wege vorgenommen.

Vorzugsweise erfolgt die Übermittlung des Lichtsignals über einen Lichtleiter, so daß die Lage des optoelektrischen Wandlers im Fahrzeug frei wählbar ist.

Als Beschleunigungssensor eignet sich insbesondere ein faseroptischer Reflexsensor mit einem Sendelichtleiter und einem Empfangslichtleiter, wobei die Lichtaustrittsfläche des Sendelichtleiters und die Lichteintrittsfläche des Empfangslichtleiters einer reflektierenden Oberfläche der seismischen Masse gegenüberliegen und in Bezug auf den Stromabnehmer ortsfest sind.

Die für die Anpreßkraft bedeutsamen Beschleunigungen haben eine maximale Frequenz von 20 bis 25 Hz, so daß der Meßbereich zwischen weniger als 1 Hz und 25 Hz liegen sollte. Beschleunigungen mit einer höheren Frequenz als 25 Hz haben eine so kleine Amplitude, daß sie vernachlässigbar sind. Dementsprechend kann eine Resonanzfrequenz für den Beschleunigungssensor gewählt werden, die wenigstens 80 Hz beträgt. Eine zu hohe Resonanzfrequenz verschlechtert die Empfindlichkeit für die unteren Frequenzen im Meßbereich, insbesondere unter 1 Hz.

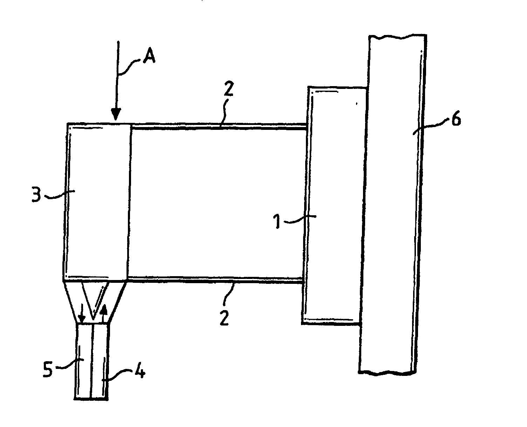

Die Erfindung wird im Folgenden anhand eines in der Figur dargestellten Ausführungsbeispiels näher erläutert. Diese zeigt den schematischen Aufbau eines Beschleunigungssensors, welcher mit einem Stromabnehmer gekoppelt ist, wie er beispielsweise aus der vorgenannten Anmeldung PCT 98/DE 01657 bekannt ist.

Der Beschleunigungssensor besteht im Wesentlichen aus einem Gehäuse 1, welches nur teilweise in der Figur dargestellt ist, einer im Gehäuse untergebrachten, über Federn 2 mit diesen gekoppelten seismischen Masse 3 und einem mit dem Gehäuse fest verbundenen, in dieses hineingeführten Lichtleiter aus einem Sendelichtleiter 4 und einem Empfangslichtleiter 5. Das Gehäuse 1 ist mit einem Bauteil 6 des Stromabnehmers fest verbunden, dieses kann beispielsweise der Wippenrahmen oder Schleifleiste sein. Das Gehäuse 1 und auch der Lichtleiter bewegen sich somit synchron mit dem Stromabnehmer. Die seismische Masse 3 hingegen folgt aufgrund ihrer federnden Lagerung verzögert den Bewegungen der Schleifleiste.

Der Sendelichtleiter 4 und der Empfangslichtleiter 5 sind parallel zueinander in vorgegebenem Abstand, vorzugsweise direkt nebeneinander, so angeordnet, daß ihre im Gehäuse 1 befindlichen Stirnflächen, d.h. die Lichtaustrittsfläche bzw. die Lichteintrittsfläche parallel zu einer ihnen zugewandten lichtreflektierenden Oberfläche der seismischen Masse 3 verlaufen. Der Sendelichtleiter 4 führt einen von einer Lichtquelle im Fahrzeug ausgehenden Sendelichtstrahl, der aus seiner Stirnfläche austritt und auf die reflektierende Oberfläche der seismischen Masse 3 trifft. Dieses Licht wird reflektiert, wobei ein Teil des reflektierten Lichtes auf die Stirnfläche des Lichtempfangsleiters 5 trifft und durch diesen zu einem optoelektrischen Wandler geleitet wird, in welchem ein entsprechendes elektrisches Signal für die weitere Verarbeitung erzeugt wird.

Das Verhältnis der auf die Lichteintrittsfläche des Empfangslichtleiters 5 auftretenden Menge des reflektierten Lichts zu der aus dem Sendelichtleiter 4 austretenden Lichtmenge hängt von dem Abstand der Stirnfläche des Lichtleiters zu der reflektierenden Oberfläche der seismischen Masse 3 ab. Da diese den Bewegungen des Stromabnehmers und damit auch des Lichtleiters verzögert folgt, tritt bei einer Beschleunigung des Stromabnehmers eine Veränderung des Abstands ein, deren Größe von der Beschleunigung abhängig ist. Somit ist die Stärke des vom Empfangslichtleiter 5 aufgenommenen und an den optoelektronischen Wandler weitergeleiteten Lichtsignals eine Funktion der positiven oder negativen Beschleunigung bei der Schwingungsbewegung des Stromabnehmers. Durch dessen Umwandlung in ein elektrisches Signal und Multiplikation mit der bekannten Masse des Stromabnehmers erhält man somit eine positive oder negative Kraftkomponente, die zu der beispielsweise durch die Meßeinrichtung nach PCT 98/DE 01657 ermittelten statischen Anpreßkraft addiert wird, um die tatsächliche Anpreßkraft zwischen dem Fahrdraht und dem Stromabnehmer zu erhalten. Der Pfeil A in der Figur zeigt dabei die Richtung der Anpreßkraft an, d.h. die seismische Masse 3 schwingt in Richtung der Anpreßkraft, so daß auch nur Beschleunigungen des Stromabnehmers in dieser Richtung berücksichtigt werden.

Der Beschleunigungssensor liegt auf dem elektrischen Potential des Fahrdrahtes. Da jedoch der Lichtleiter elektrisch isolierend ist, findet eine Potentialtrennung zwischen Beschleunigungssensor und optoelektrischem Wandler statt, so daß dessen Ausgangs-Nullsignal auf einen gewünschten Potentialwert gelegt werden kann.

## Patentansprüche

1. Vorrichtung zur Erfassung der Anpreßkraft zwischen einem Fahrdraht und einem Stromabnehmer (6) eines elektrisch gespeisten Fahrzeugs mit einer Meßeinrichtung für die statische Anpreßkraft, die aus dem von der statischen Anpreßkraft abhängigen Abstand zwischen zwei elastisch miteinander verbundenen Bauteilen des Stromabnehmers (6) bestimmt wird, und mit einem mit dem Stromabnehmer (6) gekoppelten Beschleunigungssensor für die Ermittlung der in Richtung der Anpreßkraft erfolgenden Beschleunigungen des Stromabnehmers, dessen Ausgangssignal mit dem Ausgangssignal der Meßeinrichtung zur Berechnung der Anpreßkraft verknüpft wird,
**dadurch gekennzeichnet,**
**daß** der Beschleunigungssensor eine federnd am Stromabnehmer (6) angebrachte seismische Masse (3) aufweist, deren jeweilige Position optisch erfaßt und ein entsprechendes Lichtsignal zu einem vom Stromabnehmer (6) potentialmäßig getrennten optoelektrischen Wandler übermittelt wird.

2. Vorrichtung nach Anspruch 1, **dadurch gekennzeichnet, daß** zur Übermittlung des Lichtsignals ein Lichtleiter (4, 5) vorgesehen ist.

3. Vorrichtung nach Anspruch 1 oder 2, **dadurch gekennzeichnet, daß** die seismische Masse (3) federnd in einem Gehäuse (1) gelagert ist, welches mit dem Stromabnehmer (6) fest verbunden ist.

4. Vorrichtung nach einem der Ansprüche 1 bis 3, **dadurch gekennzeichnet, daß** zur optischen Erfassung der Position der seismischen Masse (3) ein faseroptischer Reflexsensor mit einem Sendelichtleiter (4) und einem Empfangslichtleiter (5) vorgesehen ist, wobei die Lichtaustrittsfläche des Sendelichtleiters (4) und die Lichteintrittsfläche des Empfangslichtleiters (5) einer reflektierenden Oberfläche der seismischen Masse (3) gegenüberliegen und in Bezug auf den Stromabnehmer (6) ortsfest sind.

5. Vorrichtung nach Anspruch 4, **dadurch gekennzeichnet, daß** das Verhältnis der Menge des in den Empfangslichtleiter (5) eintretenden Lichts zu der Menge des aus dem Sendelichtleiter (4) austretenden Lichts von dem Abstand der reflektierenden Oberfläche der seismischen Masse (3) zu der Lichteintritts- und der Lichtaustrittsfläche des Reflexsensors abhängig ist.

6. Vorrichtung nach einem der Ansprüche 1 bis 5, **dadurch gekennzeichnet, daß** der Meßbereich des Beschleunigungssensors unterhalb 25 Hz liegt.

7. Vorrichtung nach Anspruch 6, **dadurch gekennzeichnet, daß** die Resonanzfrequenz des Beschleunigungssensors größer als 80 Hz ist.

## Claims

1. A device for determining the pressing force between a contact wire and a current collector (6) of an electrically fed vehicle, with a measuring device for measuring the static pressing force by determining the distance between two components of the current collector (6) which are elastically connected to one another, said distance being dependent on the static pressing force, and with an acceleration sensor for determining the accelerations taking place in the direction of the pressing force, said acceleration sensor being coupled to the current collector (6), wherein the output signal of the acceleration sensor is combined with the output signal of the measuring device in order to calculate the pressing force,
**characterized in that**
the acceleration sensor contains a seismic mass (3) that is resiliently arranged on the current collector (6) and the respective position of which is optically determined, and a corresponding light signal is transmitted to an optoelectric transducer that is separated from the current collector (6) with respect to its potential.

2. The device according to Claim 1, **characterized in that** a light guide (4, 5) is provided for transmitting the light signal.

3. The device according to Claim 1 or 2, **characterized in that** the seismic mass (3) is resiliently supported in a housing (1) that is rigidly connected to the current collector (6).

4. The device according to one of Claims 1-3, **characterized in that** a fiber-optic reflex sensor with an transmitting light duct (4) and an receiving light duct (5) is provided for optically determining the position of the seismic mass (3), wherein the surface of light emission of the transmitting light duct (4) and the surface of light incidence of the receiving light duct (5) are situated opposite a reflecting surface of the seismic mass (3) and arranged stationarily referred to the current collector (6).

5. The device according to Claim 4, **characterized in that** the ratio between the quantity of light being incident in the receiving light duct (5) and the quantity of light being emitted from the transmitting light duct (4) depends on the distance between the reflecting surface of the seismic mass (3) and the surface of light incidence and the surface of light emission of the reflex sensor.

6. The device according to one of Claims 1-5, **characterized in that** the measuring range of the acceleration sensor lies below 25 Hz.

7. The device according to Claim 6, **characterized by** the fact that the resonant frequency of the acceleration sensor is higher than 80 Hz.

## Revendications

1. Dispositif pour la détection de la force de compression entre un fil de contact et un collecteur de courant (6) d'un véhicule à alimentation électrique avec un dispositif de mesure pour la force de compression statique, qui est défini à partir de la distance dépendante de la force de compression statique entre deux composantes du collecteur de courant (6) reliées l'une à l'autre de façon élastique, et avec un capteur d'accélération accouplé au collecteur de courant (6) pour la détection des accélérations se produisant dans le sens de la force de compression du collecteur de courant, dont le signal de sortie est combiné avec le signal de sortie du dispositif de mesure pour le calcul de la force de compression,
**caractérisé en ce que**
le capteur d'accélération présente une masse sismique (3), qui est installée de manière résiliente sur le collecteur de courant (6) et dont la position respective est détectée de manière optique, et un signal lumineux correspondant est transmis à un convertisseur optoélectrique séparé du collecteur de courant (6) au niveau du potentiel.

2. Dispositif selon la revendication 1, **caractérisé en ce qu'**un conducteur lumineux (4, 5) est prévu pour transmettre le signal lumineux.

3. Dispositif selon la revendication 1 ou 2, **caractérisé en ce que** la masse sismique (3) est installée de manière résiliente dans un boîtier (1) qui est relié rigidement au collecteur de courant (6).

4. Dispositif selon une des revendications 1 à 3, **caractérisé en ce que**, pour la détection optique de la position de la masse sismique (3), un capteur réflexe à fibres optiques avec un conducteur lumineux d'émission (4) et un conducteur lumineux de réception (5) est prévu, la surface de sortie lumineuse du conducteur lumineux d'émission (4) et la surface d'entrée lumineuse du conducteur lumineux de réception (5) étant opposées à une surface réfléchissante de la masse sismique (3) et étant fixes par rapport au collecteur de courant (6).

5. Dispositif selon la revendication 4, **caractérisé en ce que** le rapport de la quantité de lumière entrant dans le conducteur lumineux de réception (5) par rapport à la quantité de lumière sortant du conducteur lumineux d'émission (4) dépend de la distance entre la surface réfléchissante de la masse sismique (3) et la surface d'entrée lumineuse et de sortie lumineuse du capteur réflexe.

6. Dispositif selon une des revendications 1 à 5, **caractérisé en ce que** la plage de mesure du capteur d'accélération se situe en dessous de 25 Hz.

7. Dispositif selon la revendication 6, **caractérisé en ce que** la fréquence de résonance du capteur d'accélération est supérieure à 80 Hz.
